# EUROPEAN PATENT APPLICATION

(11) **EP 3 422 675 A1**
(43) Date of publication of application: **02.01.2019**
(21) Application number: 17177794.9
(22) Date of filing: 26.06.2017
(51) Int. Cl.: H04L 29/12, H04L 29/08, H04L 12/24

(54) **A METHOD OF REQUESTING A RESOURCE BY SIMULTANEOUSLY TRANSMITTING THE SAME REQUEST MESSAGE TO A PLURALITY OF SERVERS**

(71) Applicant: Koninklijke KPN N.V., 3072 AP Rotterdam (NL)
(72) Inventor: van Steenbergen, Ate, 9737 NN Groningen (NL)
(74) Representative: Wuyts, Koenraad Maria

(57) **Abstract**

A method of requesting a resource from a plurality of servers, by a user equipment (UE), said method comprising the steps of providing a plurality of Internet Protocol (IP) addresses, wherein each of said plurality of IP addresses is associated with a different one of said plurality of servers, wherein each of said plurality of servers is arranged to provide for a same resource, transmitting a request message to each of said plurality of servers using said associated plurality of IP addresses substantially in parallel, wherein said request message requests a same resource from each of said plurality of servers, receiving response messages from said plurality of servers, wherein said response messages comprise said requested resource and selecting said resource from one of said response messages based on receive timings of each of said response messages.

## Description

### Technical field

The present invention is generally related to latency aspects perceived by a user equipment (UE), and, more specifically, to a method and a UE for requesting a resource from a plurality of servers and for selecting the resource based on receive timings.

### Background

In the development of wireless mobile telecommunications technology, a lot of emphasis is put on the throughput capabilities of the network. It is envisaged that new generations of wireless mobile telecommunication technology, like for example 5G, support data rates of tens of megabits per second per user. This will enable users to, for example, stream high content video to their mobile phone.

One of the drawbacks of these developments may be related to the latency aspects. For certain applications it is not necessarily the bandwidth restrictions that may play a dominant role, but latency restrictions. Latency issues may especially play a role for mobile user equipment like smart phones, communication equipment in self-driving cars, real-time biometric applications, data sensors, etc. In other words, applications on a user equipment may desire low latency communications. Low latency communications accomplish that the applications, running on the user equipment, are able to take swift, and timely, actions based on communications received from a content server.

### Summary

It is an objective to provide for a method for obtaining, by a user equipment (UE), a requested resource from a plurality of servers such that the latency aspect for the UE is reduced.

It is another objective to provide for a user equipment (UE), for requesting a resource from a plurality of servers such that the latency aspect for the UE is reduced.

It is yet a further objective to provide for a non-transitory computer-readable storage medium, comprising instructions which, when executed on at least one processor, cause the processor to perform the method in accordance any of the examples of the present disclosure.

In a first aspect, there is provided a method of requesting a resource from a plurality of servers, by a user equipment (UE).

The method comprising the steps of:
- providing a plurality of Internet Protocol (IP) addresses, wherein each of said plurality of IP addresses is associated with a different one of said plurality of servers, wherein each of said plurality of servers is arranged to provide for a same resource;
- transmitting a request message to each of said plurality of servers using said associated plurality of IP addresses substantially in parallel, wherein said request message requests a same resource from each of said plurality of servers;
- receiving response messages from said plurality of servers, wherein said response messages comprise said requested resource;
- selecting said resource from one of said response messages based on receive timings of each of said response messages.

According to the presented method, the resource from one of the response messages is selected based on receive timings of each of the response messages.

The basic concept behind the presented method is that the resource is requested, by the UE, substantially in parallel to a plurality of servers that all provide for a same resource. That is, each of the servers is able to provide for the requested resource. As such, each of the servers will respond to the UE with a response message, wherein the response message comprises the requested resource. Each of these response messages will arrive at a different moment in time, i.e. the UE will have different receive timings for each of these response messages. The UE will then select the resource from one of the response messages based on the receive timings of each of the response messages.

It is noted that, in accordance with the present disclosure, there is a difference between latency and response time. Latency is defined as the delay incurred in communicating a message.

For example, the latency in a communication session is defined as the amount of time it takes from when a first user sends a particular message until the time that a second user receives that particular message. Response time is defined as the total time it takes from when a UE makes a request until that same UE receives a particular response to that request. It may be argued that the response time is actually based on the latency plus the processing time of the request by the server.

The present disclosure is directed to the response time, i.e. to the response time delay. Each of the request messages are sent substantially in parallel to each of the servers. The response time for a particular request then depends on the latencies to the respective servers as well as the processing times for the respective servers to tackle a received request. The present disclosure does not reduce the response time delays of each of the servers. The present disclosure selects the resource from a response message based on the receive timings of each of the response messages.

It is further noted that the step of providing a plurality of Internet Protocol (IP) addresses, may be an active step or a passive step. That is, the UE may, for example, request the plurality of IP addresses to a particular server in the network, to a particular UE, etc. Alternatively, the UE may have stored the plurality of IP addresses locally, and may use the locally stored IP addresses for transmitting the request messages thereto.

A user equipment (UE), is, in accordance with the present disclosure, a smart phone, a tablet, a smart watch, laptop, an embedded system inside a vehicle like a car communication system, airplane, boat, motorcycle, tank, Segway or anything alike.

The inventor has found that the presented method is especially suitable for mobile UE's, i.e. UE's that move around. That is, the UE could reside in a car, train, bus, or anything alike, and may thus move from one location to another location. In such a situation, it is possible, or even likely, that the fastest server for that particular UE may change over time. The fastest server, i.e. the server having the lowest response time delay, could change during the whole trip of the UE. As such, the inventor has found that it may be beneficial to continuously transmit, by the UE, the request messages for a resources to a plurality of servers. As such, it is beneficial if the UE does not select a particular server once, and then subsequently uses that server for all subsequent messaging. In fact, it may be beneficial if the UE also transmits the subsequent messages to each of the plurality of servers as the fastest server may change over time. In such a situation, it may be ensured that the UE has the fastest server to its disposal for each of its sent out requests.

In an embodiment, said step of selecting further comprises:
- selecting said resource from one of said response messages, which selected response message was received first.

The inventor has found that, preferably, the resource should be selected from one of the response messages, which response message was received first.

The response message that arrives the first at the UE is, inherently, related to the lowest response time delay for that particular request. As such, the UE does not need to await all the other response messages, from the remaining servers, but may simply select the resource from the response message that was received first.

The UE will also receive response message from the remaining servers, but can simply discard these, or can use these response messages to verify the selected resource. That is, the later received response messages can be used to verify whether the first received resource is correct. As such, the later received response message could provide for additional value due to the above described validation check.

It is noted that, in accordance with the present disclosure, each of said plurality of servers is arranged to provide for a same resource, and that the UE is arranged to request a same resource from all of those servers.

Providing the same resource entails that each of these servers host the same, or substantially the same, web site, and/or are arranged as a data storage server hosting the same data thereby forming a redundant system, and/or anything alike.

Requesting a particular resource entails that the UE is requesting a resource, i.e. a data content item, from the servers. The particular resource is, for example, an HTML file for a web site, at least a part of a data file, or anything alike.

In an embodiment, the step of providing comprises:
- transmitting to a Domain Name System (DNS) server a DNS query, for resolving a domain name, wherein said query comprises said domain name to be resolved;
- receiving from said DNS server a DNS response comprising said plurality of IP addresses corresponding to said domain name.

The Domain Name System is a concept which defines in which way the internet domain names are translated into Internet Protocol (IP) addresses. A Domain Name System (DNS) server maps the domain name that people use to locate a website, e.g. http://ww.kpn.com, to an IP address that a user equipment (UE), can use to locate that particular website. Browsing the World Wide Web, i.e. the internet, is one of many applications that rely on a proper functioning of the DNS concept.

Nowadays, the DNS is a hierarchical decentralized naming system for all kinds of electronic devices connected to the internet like mobile phones, computers, tablets, smart watches, etc. The DNS is provided as a worldwide, distributed directory service, which is, in the present world wide web, a required component for the adequate functionality of the internet.

It is noted that, in accordance with the presented embodiment, the received domain name resolves to a plurality of IP addresses, wherein the servers corresponding to those IP addresses may host the same or identical services. As such, a UE may be served by any of these servers.

The inventor has found that, often, a request to a particular server is preceded by a DNS query for obtaining those servers. The already existing DNS responses may already comprise a plurality of IP addresses, wherein these IP addresses may be used in accordance with the present disclosure.

More specifically, the step of providing may comprise the steps of:
- receiving by said DNS server a DNS query for resolving a domain name, wherein said query comprises said domain name to be resolved and comprises user geolocation information of said user equipment (UE), wherein said user geolocation information provides for an indication of a geographical location of said UE;
- resolving said received domain name to a plurality of Internet Protocol (IP) addresses, wherein said resolving comprises the steps of:
   - obtaining said plurality of IP addresses corresponding to said received domain name, wherein each of said plurality of IP addresses is associated with server geolocation information of a corresponding server, wherein each of said server geolocation information provides for an indication of a geographical location of said corresponding server,
   - selecting a plurality of IP addresses based on comparisons of said user geolocation information with each of said server geolocation information;
- transmitting a DNS response comprising said selected plurality of IP addresses.

According to the presented embodiment, a plurality of IP addresses may be selected based on comparisons of the user geolocation information with each of the server geolocation information. The basis insight here is that it is likely that servers that are physically located the closest to the physical location of the UE may provide for the fastest response times. That is, it is likely that the response time delays are lowest for those servers that are in the vicinity of the UE itself.

The DNS server has to its disposal the user geolocation information, i.e. information which provides for an indication of a geographical location of the UE, as well as the server geolocation information, i.e. information which provides for indications of geographical locations of the servers. The geolocation information may be provided in different kinds of forms and shapes. Typically, the user geolocation information and the server geolocation information are provided in a same format, i.e. a same dimension / domain, such that the DNS server is able to effectively compare the user geolocation information with any of the server geolocation information.

It is noted that, in accordance with the present embodiment, the received domain name resolves to a plurality of IP addresses, wherein the servers corresponding to those IP addresses may host the same or identical services. As such, a UE may be served by any of these servers. The selection of these servers, by the DNs server, for a particular UE is based on the concept that servers closest to the UE are, most likely, the servers with the least latency.

In an example, the UE is arranged to send a same DNS query to the DNS server for resolving the same domain name to a plurality of IP addresses in case the obtained latency and/or response time for the available IP addresses for the UE fall below a predetermined threshold.

In an alternative example, the UE may be arranged to send a same DNS query to the DNS server for resolving the same domain name to a plurality of IP addresses in case the order of the received response messages changes over time.

In yet an alternative example, the UE may be arranged to send a same DNS query to the DNS server for resolving the same domain name to a plurality of IP addresses in case a predetermined time threshold has elapsed after initially transmitting the same DNS query.

In yet a further example, the UE may be arranged to send a same DNS query to the DNS server for resolving the same domain name to a plurality of IP addresses in case a predetermined distance threshold has elapsed after initially transmitting the same DNS query.

In an even further example, the UE may be arranged to send a same DNS query to the DNS server for resolving the same domain name to a plurality of IP addresses in case a combination of the preceding conditions have been met.

In an example, said UE comprises an application, wherein said application comprises a plurality of sub-applications, wherein each sub-application is associated with its own socket, wherein said step of transmitting comprises:
- transmitting, using each of said sockets, said same request message to each of said plurality of servers.

The advantage of the presented embodiment is that the request messages are transmitted even more in parallel, i.e. at the same time, whenever multiple sockets are used, wherein each socket is used for transmitting a single request message.

In an example, said step of transmitting comprises:
- transmitting said same request message to each of said plurality of servers substantially in parallel, wherein for each server a different socket is used.

In yet another embodiment, said UE comprises a plurality of network interfaces arranged for transmitting said same request message to each of said plurality of servers, wherein for each server a different network interface of said plurality of network interfaces is used.

The advantage of this embodiment is that the request messages are transmitted even more in parallel whenever multiple network interfaces are used, i.e. one interface for a single request message. The mutual dependency of the request messages is reduced whenever unique interfaces are used for the request messages.

In accordance with the present disclosure, said request message may be any of:
- a Hypertext Transfer Protocol, HTTP, request message for requesting content of a website;
- a Simple Object Access Protocol, SOAP, message;
- a File Transfer Protocol, FTP, message, and
- a Simple Mail Transfer Protocol, SMTP, message.

In a further embodiment, the method further comprises the step of:
- disregarding, by said UE, any of said response messages which received second and further.

The advantage of this embodiment is that the UE does not need to spend any substantially resources on response messages that are received second and further. That is, the UE may simply disregard these messages to improve its efficiency.

The expressions, i.e. the wording, of the different aspects comprised by the method according to the present disclosure should not be taken literally. The wording of the aspects is merely chosen to accurately express the rationale behind the actual functioning of the aspects.

In accordance with the present disclosure, different aspects applicable to the above mentioned examples of the methods in a first aspect of the disclosure, including the advantages thereof, correspond to the aspects which are applicable to methods of the second aspect of the disclosure.

In a second aspect of the present disclosure, there is provided a user equipment (UE), arranged for requesting a resource from a plurality of servers, wherein said UE comprises:
- provide equipment arranged for providing a plurality of Internet Protocol (IP) addresses, wherein each of said plurality of IP addresses is associated with a different one of said plurality of servers, wherein each of said plurality of servers is arranged to provide for a same resource;
- a transmitter arranged for transmitting a same request message to each of said plurality of servers using said associated plurality of IP addresses, wherein said request message requests a same resource from each of said plurality of servers;
- a receiver arranged for receiving subsequent response messages from said plurality of servers, wherein said response messages comprise said requested resource;
- a processor arranged for selecting said resource from one of said response messages based on receive timings of each of said response messages.

In an embodiment, the processor is arranged for selecting said resource from one of said response messages, which selected response message was received first In a further embodiment, the provide equipment is arranged for:
- transmitting to a Domain Name System (DNS) server a DNS query, for resolving a domain name, wherein said query comprises said domain name to be resolved;
- receiving from said DNS server a DNS response comprising said plurality of IP addresses corresponding to said domain name.

In another embodiment, the UE comprises an application, wherein said application comprises a plurality of sub-applications, wherein each sub-application is associated with its own sockets, wherein each of said sockets are used for transmitting said same request message to each of said plurality of servers.

Here, the transmitter may be arranged to transmit said same request message to each of said plurality of servers substantially in parallel, wherein for each server a different socket is used.

In a specific embodiment, the comprises a plurality of network interfaces arranged for transmitting said same request message to each of said plurality of servers, wherein for each server a different network interface of said plurality of network interfaces is used.

In a third aspect, there is provided a non-transitory computer-readable storage medium, comprising instructions which, when executed on at least one processor, cause the at least one processor to carry out the method according to any of the examples as provided above.

The above-mentioned and other features and advantages of the disclosure will be best understood from the following description referring to the attached drawings. In the drawings, like reference numerals denote identical parts or parts performing an identical or comparable function or operation.

### Brief description of the drawings

Fig. 1 shows a basic concept of a Domain Name System (DNS), procedure.
Fig. 2 shows an example of a user equipment (UE), having a plurality of sub applications, which sub applications are arranged to simultaneously transmit request messages.
Fig. 3 shows an embodiment of a method in accordance with the present disclosure.
Fig. 4 shows an embodiment of a user equipment in accordance with the present disclosure.

### Detailed description of the drawings

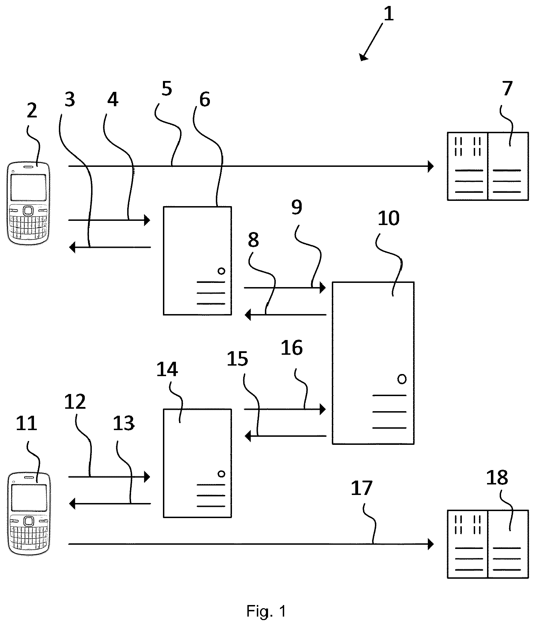

Fig. 1 shows a basic concept of a Domain Name System (DNS), procedure. Here, the procedure is explained with reference to two user equipment as indicated with reference numerals 2 and 11. The UE 2 resides, for example, in a country in Europe. The UE 11 resides, for example, in a the United States of America. The UE's 2, 11 are depicted as mobile phones. It is however noted that the UE's 2, 11 may be any type of digital communication device suitable for internet communication such as a laptop, tablet, personal computer, vehicle communication system, etc.

Both of the UE's 2, 11 send out the same Domain Name System (DNS), query 2, 12 towards the DNS server 10. The same DNS query 2, 13 means that both UE's 2, 11 would like to resolve the same domain name, for example http://www.kpn.com/. In the present situation, the DNS queries 2, 12 traverse local DNS servers as indicated with reference numerals 6, 14. These local DNS servers 6, 14 may provide a same type of service as the DNS server 10. However, in the present situation, the local DNS servers 6, 14 forward the DNS queries 4, 12 towards the DNS server. This is indicated with reference numerals 9 and 16.

In accordance with the present disclosure, the DNS queries 4, 12 and thus also the queries as indicated with reference numerals 9 and 16, may comprise user geolocation information of the UE 2, 11, respectively. User geolocation information provides for an indication of a geographical location of the corresponding UE 2, 11. That is, the information provided in the DNS queries 4, 9, 12, 16 enables the recipient to determine the physical location of the corresponding UE 2, 11.

For example, the UE may comprise a Global Positioning System, GPS, unit for determining its physical location and may provide GPS coordinates into a respective DNS query. Typically, the user geolocation information may be provided using latitude and longitude coordinates. In another example a cellID is provided in the DNS query, by the respective UE, to indicate the position/location of the respective UE.

The DNS server 10 will receive the DNS queries 9, 16 and will resolve the domain name provided therein. Hereto, the DNS server 10 may obtain a plurality of IP addresses 7, 18 corresponding to the received domain name, wherein each of the plurality of IP addresses may be associated with server geolocation information of a corresponding server, wherein each of the server geolocation information provides for an indication of a geographical location of the corresponding server.

The server geolocation information may comprise GPS coordinates. Another option is that the server geolocation information is provided using latitude and longitude coordinates. In a further example, a network location reference is provided for indicating the location of a respective server in the network.

The DNS server 10 will then select one or more of the plurality of IP addresses 7, 18 based on comparisons of the user geolocation information with each of the server geolocation information. In the present scenario, the DNS server 10 will select a single IP address, being the IP address indicated with reference numeral 7, for the UE indicated with reference numeral 2. The DNS server 10 will further select a single IP address, being the IP address indicated with reference numeral 18, for the UE indicated with reference numeral 11.

As mentioned above, the selecting step may be based on comparisons of the user geolocation information with each of the server geolocation information. For example, the DNS server 10 may decide that a server is selected in case the physical distance between a location of the UE and a location of the server is less than a predetermined distance threshold.

The basis assumption here is that it is likely that servers that are physically located closest to the physical location of the UE may provide for the fastest response times. That is, it is likely that the response time delays are lowest for those servers that are in the vicinity of the UE itself.

As such, the DNS server 10 will send two DNS responses 8, 15. The DNS response indicated with reference numeral 8 comprises the IP address indicated with reference numeral 7. The DNS response indicated with reference numeral 15 may comprise the IP address indicated with reference numeral 18. Both DNS responses 8, 15 are then, subsequently, transmitted back to the respective UE 2, 11, via appropriate DNS responses as indicated with reference numerals 3 and 13.

Once the UE's 2, 11 have received the DNS responses, the UE's may set up connections 5, 17 to the respective IP address 7, 18, comprised therein. It is noted that the respective IP addresses 7, 18 can both be send to the device as indicated with reference numeral 2.

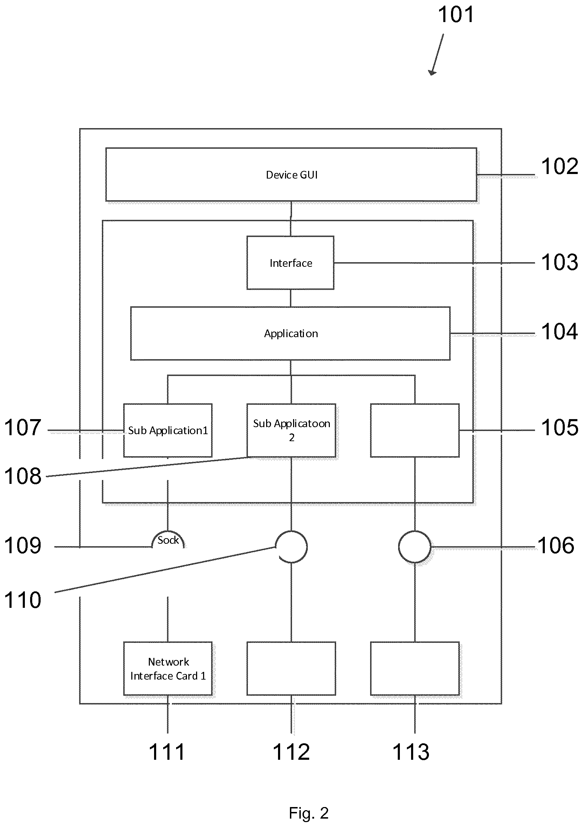

Fig. 2 shows an example of a user equipment (UE), 101 having a plurality of sub applications 105, 107, 108, which sub applications 105, 107, 108 are arranged to simultaneously transmit request messages.

The UE 101 can be any type of hardware suitable for internet communication, like a smart phone, a tablet, or anything alike. The UE 101 should have at least one external connectivity interface, like a network card, Wi-Fi card, Bluetooth, etc., for transmitting request messages.

First, the UE 101 comprises a device Graphical User Interface, GUI, 102. The GUI 102 is a user interface which allows users of the UE to interact with the hardware using icons or other types of visual indicators. The user is able to provide input via an input device like a touch screen, a keyboard, a mouse, or any. According to the present disclosure, the type of input device is not of importance.

The GUI 102 is associated with an interface 103, like an Application Programming Interface, API, to connect the GUI 102 to the application 104 that is running on the device 101. The application 104 is typically an "App" or anything alike. The interface may be an input/output interface between the application and the GUI 102 and/or the input device.

It is noted that, in the present example, the application 104 is divided into three sub applications 105, 107, 108, wherein each of the sub applications 105, 107, 108 is at least responsible for transmitting their own request message. This will be explained in more detail here below.

First, the UE provides a plurality of Internet Protocol (IP) addresses, wherein each of said plurality of IP addresses is associated with a different one of a plurality of servers, wherein each of said plurality of servers is arranged to provide for a same resource.

The IP addresses may be stored somewhere locally on the device 101 itself, or may be obtained using a DNS query as explained with reference to figure 1. In any case, the application may have access to a plurality of IP addresses. Each of these IP addresses is, subsequently, coupled to one of the sub applications 105, 107, 108. For example, the sub application referenced to with reference numeral 105 is associated with a first IP address, the sub application referenced to with reference numeral 108 is associated with a second IP address and the sub application referenced to with reference numeral 108 is associated with a third IP address. This will ensure that each of the sub applications 105, 107, 108 will use the IP address that is associated therewith.

The UE 101 then starts to transmit request messages to each of the plurality of servers using the associated IP addresses, wherein the request messages are sent substantially in parallel. As such, the sub applications 105, 107, 108 may mutually coordinate their transmissions such that each of the request messages are sent substantially in parallel.

In the present scenario, each sub application 105, 107, 108 is associated with its own socket 106, 109, 110, respectively, wherein each of the sockets 106, 109, 110, are used for transmitting the same request message to each of the plurality of servers. This is beneficial as by using the sockets 106, 109, 110, each of the request messages may be sent out in more of a parallel manner.

Here, the UE 101 even comprises three different external interfaces as referenced to with reference numerals 111, 112 and 113. Each of the external interfaces 111, 112 and 113 is associated with a single socket 106, 109, 110 thereby improving the transmitting of the request messages at substantially the same time, i.e. in parallel.

In a next step, the UE receives the response messages from the plurality of servers, wherein the response messages comprise the requested resource. Finally, the UE selects the resource from one of the response messages based on receive timings of each of said response messages.

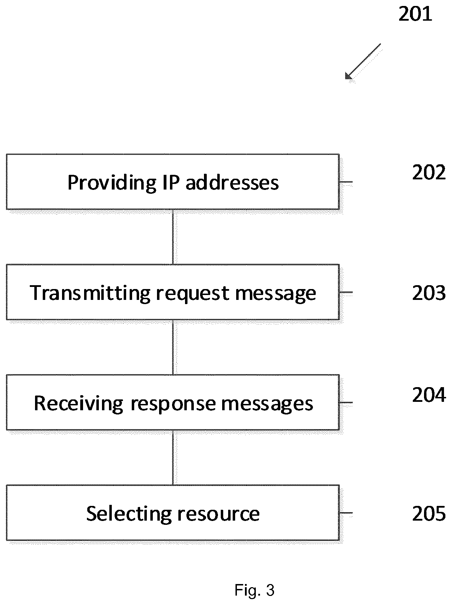

Fig. 3 shows an embodiment of a method in accordance with the present disclosure.

The method 201 is directed to requesting a resource from a plurality of servers, by a user equipment (UE), said method comprising the steps of:
- providing 202, by said UE, a plurality of Internet Protocol (IP) addresses, wherein each of said plurality of IP addresses is associated with a different one of said plurality of servers, wherein each of said plurality of servers is arranged to provide for a same resource;
- transmitting 203, by said UE, a request message to each of said plurality of servers using said associated plurality of IP addresses substantially in parallel, wherein said request message requests a same resource from each of said plurality of servers;
- receiving 204, by said UE, response messages from said plurality of servers, wherein said response messages comprise said requested resource;
- selecting 205, by said UE, said resource from one of said response messages based on receive timings of each of said response messages.

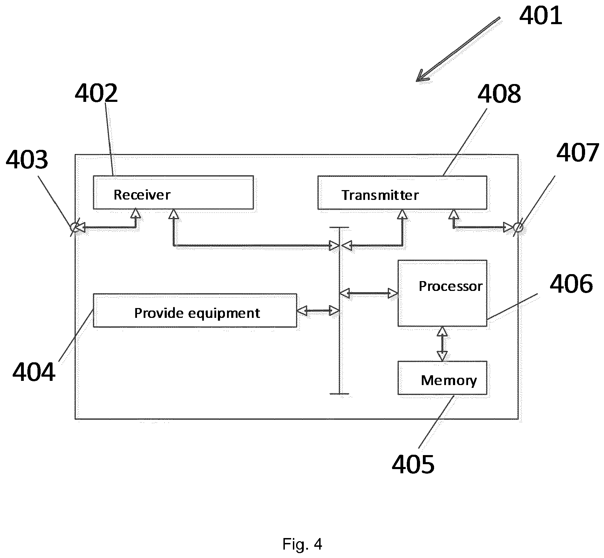

Fig. 4 shows an embodiment of a user equipment in accordance with the present disclosure.

The user equipment (UE), 401 is arranged for requesting a resource from a plurality of servers, wherein said UE comprises:
- provide equipment 404 arranged for providing a plurality of Internet Protocol (IP) addresses, wherein each of said plurality of IP addresses is associated with a different one of said plurality of servers, wherein each of said plurality of servers is arranged to provide for a same resource;
- a transmitter 408 arranged for transmitting a same request message to each of said plurality of servers using said associated plurality of IP addresses, wherein said request message requests a same resource from each of said plurality of servers;
- a receiver 402 arranged for receiving subsequent response messages from said plurality of servers, wherein said response messages comprise said requested resource;
- a processor 406 arranged for selecting said resource from one of said response messages based on receive timings of each of said response messages.

Here, the receiver and the transmitter could be formed as one single transceiver. Further, multiple receivers and/or transmitters may be provided in the user equipment for increasing the paralellity of the transmitting of the request message.

Here, incoming data packets, or messages, pass through the input terminal 403 before they reach the receiver 402, or receiving module. Outgoing data packets or messages pass or are sent by the transmitter 408, or transmit module, via the output terminal 407. It is noted that the transmitter may be integrated in the same device as the receiver.

The UE 401 further comprises a processor 406 and a memory 405, which processor 406 is connected to the receiver 402, the transmitter 408 and the provide equipment 404 via a bus connection or the like.

One of the advantages of the present disclosure is that the latency and/or the round time delay perceived by a user for requesting a resource from a server is reduced. This is accomplished by simultaneously requesting the same resource from a plurality of servers, wherein each of the server is arranged to provide for the same, or a similar, resource. This accomplishes that the UE will receive a multitude of responses, wherein each of the responses comprises the requested resource. The UE may then select the resource in a response message that was received first. In such a manner, it is not necessary to first determine which server is most likely the fastest server for a particular UE, and second, to use that particular server in subsequent messaging. The presented method is beneficial as each request may be provided to the plurality of servers, thereby increasing the likelihood that the requested resource is received within, for example, a predetermined time threshold.

A further advantage is that the presented method may be used in combination with a DNS query. DNS servers already, often, have multiple IP addresses available for a particular domain. In prior art situations, the IP addresses may already be provided to a particular UE in a DNS response, in response to a DNS query comprising a particular domain name. As such, the UE may be provided with a plurality of IP addresses, wherein each of the corresponding servers of the IP addresses is able to server the UE. That is, each of the corresponding servers is able to provide the UE with its requested resource.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

## Claims

1. A method of requesting a resource from a plurality of servers, by a user equipment (UE), said method comprising the steps of:
- providing a plurality of Internet Protocol (IP) addresses, wherein each of said plurality of IP addresses is associated with a different one of said plurality of servers, wherein each of said plurality of servers is arranged to provide for a same resource;
- transmitting a request message to each of said plurality of servers using said associated plurality of IP addresses substantially in parallel, wherein said request message requests a same resource from each of said plurality of servers;
- receiving, by said UE, response messages from said plurality of servers, wherein said response messages comprise said requested resource;
- selecting, by said UE, said resource from one of said response messages based on receive timings of each of said response messages.

2. A method in accordance with claim 1, wherein said step of selecting further comprises:
- selecting, by said UE, said resource from one of said response messages, which selected response message was received first.

3. A method in accordance with any of the previous claims, wherein said step of providing comprises:
- transmitting, by said UE, to a Domain Name System (DNS) server a DNS query for resolving a domain name, wherein said query comprises said domain name to be resolved;
- receiving, by said UE, from said DNS server, a DNS response comprising said plurality of IP addresses corresponding to said domain name.

4. A method in accordance with any of the previous claims, wherein said UE comprises an application, wherein said application comprises a plurality of sub-applications, wherein each sub-application is associated with its own socket, wherein said step of transmitting comprises:
- transmitting, using each of said sockets, said same request message to each of said plurality of servers.

5. A method in accordance with claim 4, wherein said step of transmitting comprises:
- transmitting said same request message to each of said plurality of servers substantially in parallel, wherein for each server a different socket is used.

6. A method in accordance with claim 5, wherein said UE comprises a plurality of network interfaces arranged for transmitting said same request message to each of said plurality of servers, wherein for each server a different network interface of said plurality of network interfaces is used.

7. A method in accordance with any of the previous claims, wherein said request message is any of:
- a Hypertext Transfer Protocol, HTTP, request message for requesting content of a website;
- a Simple Object Access Protocol, SOAP, message;
- a File Transfer Protocol, FTP, message, and
- a Simple Mail Transfer Protocol, SMTP, message.

8. A method in accordance with any of the previous claims, wherein said method further comprises the step of:
- disregarding, by said UE, any of said response messages which received second and further.

9. A user equipment (UE), arranged for requesting a resource from a plurality of servers, wherein said UE comprises:
- provide equipment arranged for providing a plurality of Internet Protocol (IP) addresses, wherein each of said plurality of IP addresses is associated with a different one of said plurality of servers, wherein each of said plurality of servers is arranged to provide for a same resource;
- a transmitter arranged for transmitting a same request message to each of said plurality of servers using said associated plurality of IP addresses, wherein said request message requests a same resource from each of said plurality of servers;
- a receiver arranged for receiving subsequent response messages from said plurality of servers, wherein said response messages comprise said requested resource;
- a processor arranged for selecting said resource from one of said response messages based on receive timings of each of said response messages.

10. A UE in accordance with claim 9, wherein said processor is arranged for selecting said resource from one of said response messages, which selected response message was received first

11. A UE in accordance with any of the claims 9 - 10, wherein said provide equipment is arranged for:
- transmitting to a Domain Name System (DNS) server a DNS query for resolving a domain name, wherein said query comprises said domain name to be resolved;
- receiving from said DNS server a DNS response comprising said plurality of IP addresses corresponding to said domain name.

12. A UE in accordance with any of the claims 9 - 11, wherein said UE comprises an application, wherein said application comprises a plurality of sub-applications, wherein each sub-application is associated with its own sockets, wherein each of said sockets are used for transmitting said same request message to each of said plurality of servers.

13. A UE in accordance with claim 12, wherein said transmitter is arranged to transmit said same request message to each of said plurality of servers substantially in parallel, wherein for each server a different socket is used.

14. A UE in accordance with claim 13, wherein said UE comprises a plurality of network interfaces arranged for transmitting said same request message to each of said plurality of servers, wherein for each server a different network interface of said plurality of network interfaces is used.

15. A non-transitory computer-readable storage medium, comprising instructions which, when executed on at least one processor, cause the at least one processor to carry out the method according to any of the claims 1 - 8.
